# EUROPÄISCHE PATENTSCHRIFT

(11) **EP 2 334 916 B1**
(45) Veröffentlichungstag und Bekanntmachung des Hinweises auf die Patenterteilung: **29.05.2013**
(21) Anmeldenummer: 09782685.3
(22) Anmeldetag: 07.09.2009
(51) Int. Cl.: F01N 3/035, F01N 3/20

(54) **ANORDNUNG UND VERFAHREN ZUR ABGASREINIGUNG MITTELS EINES REDUKTIONSMITTELS**
DEVICE AND METHOD FOR EXHAUST GAS PURIFICATION USING A REDUCING AGENT
DISPOSITIF ET PROCÉDÉ D'ÉPURATION DE GAZ D'ÉCHAPPEMENT AU MOYEN D'UN AGENT REDUCTEUR

(30) Priorität: 24.09.2008 DE 102008048806
(43) Veröffentlichungstag der Anmeldung: 22.06.2011
(73) Patentinhaber: Emitec Gesellschaft für Emissionstechnologie mbH, 53797 Lohmar (DE)
(72) Erfinder: WITTE-MERL, Olaf, 53919 Weilerswist (DE); HODGSON, Jan, 53840 Troisdorf (DE); BRÜCK, Rolf, 51429 Bergisch Gladbach (DE)
(74) Vertreter: Rössler, Matthias
(86) Internationale Anmeldenummer: PCT/EP2009/061543
(87) Internationale Veröffentlichungsnummer: WO 2010/034610

(56) Entgegenhaltungen:
- EP-A- 1 890 016
- DE-A1-102006 051 788

## Beschreibung

Die vorliegende Erfindung betrifft eine Anordnung sowie ein Verfahren zur Reinigung eines Abgasstromes einer Verbrennungskraftmaschine, wobei ein Reaktionsmittel auf die Abströmseite eines Elementes zur Abgasreinigung aufgesprüht wird.

Für die heutigen gebräuchlichen Systeme zur Abgasreinigung von Verbrennungskraftmaschinen, insbesondere von Dieselmotoren, werden Elemente zur Abgasreinigung in Abgasleitungen eingesetzt, die für den ordnungsgemäßen Betrieb wenigstens zeitweise der Zufuhr eines Reaktionsmittels bedürfen. Zu diesen Elementen zählen insbesondere SCR-Katalysatoren, denen zur selektiven Reduktion von Stickoxiden Ammoniak in freier oder in gebundener Form als Reduktionsmittel, beispielsweise einer Harnstofflösung, zugeführt wird. Weiter sind solche Elemente auch oxidationskatalytische Abgasreinigungselemente, denen zur Abgasaufheizung Kohlenwasserstoff-Verbindungen (Kraftstoff) als Reaktionsmittel zugeführt wird. Diese Aufheizung des Abgasstromes ist bei einer thermischen Rußregeneration eines Partikelfilters oder für die Schwefelregeneration von Stickoxydspeicherkatalysatoren vorgesehen.

Für eine sehr gute Abgasreinigung ist eine möglichst gleichmäßige Verteilung und eine möglichst feine Zerstäubung des Reaktionsmittels in dem Querschnitt der Abgasleitung gewünscht.

Durch die Zugabe des Reaktionsmittels in eine Richtung entgegen der Abgasströmung wird durch die höhere Relativgeschwindigkeit des Reaktionsmittels zum Abgasstrom eine feinere und bessere Verteilung des Reaktionsmittels erreicht. Dieser Effekt wird zusätzlich unterstützt durch das Auftreffen des Reaktionsmittels auf die Abströmseite des Elementes zur Abgasreinigung, weil die auftreffenden Tropfen des Reaktionsmittels zusätzlich zerstäubt werden bzw. von den Oberflächen des Elementes direkt in den Abgasstrom verdampfen können.

Aus DE 10 2006 051 788 A1 ist ein Abgasnachbehandlungssystem für Verbrennungsmotoren bekannt, in dem eine Injektionsvorrichtung ein Reaktionsmittel entgegen der Abgasströmung in die Abgasleitung zugibt. Dabei ist stromaufwärts der Injektionsvorrichtung ein Bauelement () vorgesehen, auf dem zumindest ein Teil des zugegebenen Reaktionsmittels auftreffen kann. Die Injektionsvorrichtung ist dabei in einem Abstand von höchstens 200 mm von dem stromaufwärts angeordneten Bauelement entfernt. Auf diese Weise soll sichergestellt werden, dass eine ausreichende Verdampfung des Reduktionsmittels im Abgasstrom erfolgt, befor dieses das Bauelement erreicht.

In der EP 1 890 016 A wird ebenfalls eine Injektionsvorrichtung für Reduktionsmittel offenbart. Es wird dort ausgeführt, dass die Zugabe der Reaktantenströmung stromabwärts eines Elements und im Gegenstrom erfolgen soll, so dass eine möglichst starke Verwirbelung der Reaktantenströmung erfolgt. Dadurch soll eine gleichmäßige Verteilung der Reaktanten im Abgas und bereits eine zumindest teilweise Verdampfung der Reaktantenströmung durch die Wärme des Abgases erreicht werden.

Aufgabe der Erfindung ist es, die mit Bezug auf den Stand der Technik geschilderten Probleme zumindest teilweise zu lösen und insbesondere eine Anordnung bzw. ein Verfahren anzugeben, durch das eine möglichst gleichmäßige Verteilung des Reaktionsmittels im Abgasstrom erreicht wird, um somit die Verdampfung des Reaktionsmittels zu verbessern.

Diese Aufgaben werden gelöst mit einer Anordnung gemäß den Merkmalen des Patentanspruchs 1 sowie durch ein Verfahren gemäß dem Patentanspruch 5. Weitere vorteilhafte Ausgestaltungen der Erfindung sind in den abhängig formulierten Patentansprüchen angegeben. Es ist darauf hinzuweisen, dass die in den abhängig formulierten Unteransprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegeben Merkmale in der Beschreibung näher präzisiert und erläutert, wobei weitere bevorzugte Ausgestaltungen der Erfindung dargestellt werden.

Vorliegend wird die Aufgabe durch eine Anordnung zur Reinigung eines Abgasstromes einer Verbrennungskraftmaschine gelöst, wobei die Anordnung zumindest eine Abgasleitung aufweist, in der ein Element zur Abgasreinigung mit einer ersten Stirnseite und einer zweiten Stirnseite angeordnet ist, wobei das Element von der ersten Stirnseite zu der zweiten Stirnseite von dem Abgasstrom durchströmbar ist und stromabwärts des Elementes eine Zugabeeinheit zur Zugabe eines Reaktionsmittels in dem Abgasstrom vorgesehen ist, wobei die Zugabeeinheit in einer Entfernung von höchstens 30 mm von der zweiten Stirnseite des Elementes beabstandet und im laminaren Strömungsbereich des Elementes angeordnet ist, so dass zumindest 90% des zugeführten Reaktionsmittels auf die zweite Stirnseite des Elementes trifft.

Unter einem Element zur Abgasreinigung wird insbesondere ein Katalysatorträgerkörper verstanden, der eine katalytisch aktive Beschichtung (insbesondere in einem Washcoat) umfasst, die eine Umsetzung zumindest einer Komponente des Reaktionsmittels und/oder des Abgases bewirkt. Alternativ oder zusätzlich kann das Element auch die Funktion eines Partikelfilters oder einer Partikelfalle aufweisen, um die Konzentration von Partikeln im Abgasstrom zu verringern. Hierbei kann es sich sowohl um einen geschlossenen Partikelfilter handeln, der eine Vielzahl von Kanälen umfasst, die wechselweise verschlossen sind, als auch um einen so genannten Nebenstromfilter, bei dem mittels Einbauten ein Teil des Abgases in ein poröses Medium geführt wird. Sowohl Katalysatorträgerkörper als auch Partikelfilter können insbesondere in Form eines Wabenkörpers ausgebildet sein, bei dem ein keramischer und/oder metallischer Körper mit einer Vielzahl von durchströmbaren Hohlräumen ausgebildet ist. Ein metallischer Wabenkörper kann zudem neben wenigstens teilweise strukturierten metallischen Folien auch Lagen aus Feinstdrähten (Vlies) aufweisen.

Das Element weist eine erste Stirnseite auf, die dem Abgasstrom im Betrieb der Anordnung entgegen gerichtet ist, so dass das Abgas durch die Abgasleitung in das Element über die erste Stirnseite einströmt und durch das Element hin zur zweiten Stirnseite des Elementes geleitet wird. In Folge der Durchströmung des Elementes wird insbesondere eine Vergleichmäßigung der Abgasströmung über den Querschnitt der Abgasleitung erreicht, die sich zumindest in einem kurzen Bereich stromabwärts des Elementes fortsetzt, bevor sich die einzelnen Strömungen, die vorher insbesondere in einem Wabenkörper wenigstens teilweise voneinander getrennt waren, wieder in der Abgasleitung vereinigen. Dieser laminare Strömungsbereich, der nur in unmittelbarer Nähe der zweiten Stirnseite des Elementes auf der Abströmseite des Elementes auftritt, ermöglicht eine reproduzierbare und einstellbare Verteilung des eingebrachten Reaktionsmittels. Dies ist dadurch begründet, dass in diesem laminaren Strömungsbereich kaum Turbulenzen des Abgasstromes auftreten, die eine Verwirbelung des eingebrachten Reaktionsmittels bewirken und damit örtlich wechselnde Relativgeschwindigkeiten des Abgasstromes erzeugen. Außerhalb des laminaren Strömungsbereiches wird das zugeführte Reaktionsmittel nicht gleichmäßig und damit nicht vorbestimmbar in seinem Strömungsverhalten beeinflusst, sondern durch die Turbulenzen des Abgasstromes in nicht definierter Weise abgelenkt.

Aus diesem Grund ist die Zugabeeinheit in einer Entfernung von höchstens 30 mm, insbesondere in einer Entfernung von höchstens 20 mm und bevorzugt in einer Entfernung von höchstens 15 mm von der zweiten Stirnseite des Elementes angeordnet. Die Entfernung ist dabei als Abstand der Zugabeeinheit, bzw. der Düsenöffnung, von dem am weitesten entfernten Punkt der zweiten Stirnseite des Elementes in Hauptströmungsrichtung definiert.

Durch eine spezielle Ausgestaltung der Zugabeeinheit, die z.B. eine dauernd offene Düse oder ein geregeltes Ventil aufweisen kann, wird das Reaktionsmittel in die Abgasleitung eingebracht, wobei die Düse an die weitgehend konstanten Strömungsbedingungen speziell auf den hier vorliegenden Anwendungsfall angepasst werden kann, so dass eine gewünschte, gleichmäßige Kontaktierung des Elementes durch das Reaktionsmittel bei den auftretenden Betriebsbedingungen erreicht wird. Insbesondere wird so auch erreicht, dass keine (signifikante) Menge des zugegebenen Reaktionsmittels neben die zweite Stirnseite gesprüht wird bzw. (nahezu) die gesamte Menge die zweite Stirnseite erreicht. Bevorzugt liegt der Anteil des auftreffenden Reaktionsmittels bei mehr als 90 % oder sogar mehr als 96 % der abgegebenen Menge, insbesondere unter allen Betriebsbedingungen der Anordnung bei einem Kraftfahrzeug.

Gemäß einer weiteren vorteilhaften Ausführungsform ist die zweite Stirnseite sphärisch geformt, insbesondere konkav sphärisch ausgeführt, so dass durch die der sphärischen zweite Stirnseite gegenüberliegend angeordnete Zugabeeinheit das Reaktionsmittel gleichmäßig auf der Fläche der zweiten Stirnseite verteilt werden kann. Insbesondere ist die sphärische Ausführung der zweiten Stirnseite des Elementes dabei auf die Anordnung der Zugabeeinheit ausgerichtet.

Gemäß einer weiteren vorteilhaften Ausführungsform ist die zweite Stirnseite gegenüber der Abgasleitung geneigt ausgeführt, wobei diese Neigung insbesondere derart gegenüber der Zugabeeinheit angeordnet ist, dass eine gleichmäßige Verteilung des zugeführten Reaktionsmittels auf der Fläche der zweiten Stirnseite erreicht werden kann. Eine derartige Neigung der zweiten Stirnseite eines Elementes kann fertigungstechnisch einfach ausgeführt werden und ist daher bevorzugt einzusetzen.

Gemäß einer Weiterbildung der Anordnung ist die Zugabeeinheit außerhalb eines Abgasleitungsdurchmessers angeordnet, insbesondere in einem nicht (direkt) durchströmten Teilbereich der Abgasleitung. Dieser Teilbereich kann beispielsweise als kegelartiges Gehäuse ausgeführt sein, das an der Umfangsfläche der Abgasleitung angeordnet ist, wobei sich der Kegel zur Abgasleitung hin öffnet und die Zugabeeinheit an dem anderen Ende des Kegels angeordnet ist. Insbesondere kann die Zugabeeinheit zusätzlich durch ein Abschirmblech wenigstens teilweise von dem Abgasstrom abgeschirmt sein. Durch eine derartige Anordnung der Zugabeeinheit außerhalb des Abgasstromes wird einerseits erreicht, dass die Zugabeeinheit durch im Abgasstrom vorhandene Partikel nicht verschmutzt wird und damit auch nicht wenigstens teilweise verstopfen kann, und andererseits, dass eine gleichmäßige Ausformung des Sprühkegels von Reaktionsmittel in dem Teilbereich ermöglicht und dieser Sprühkegel in den laminaren Strömungsbereich des Abgasstroms eingebracht wird.

Gemäß einer vorteilhaften Ausführungsform ist die Zugabeeinheit unter einem Winkel gegenüber der Abgasleitung angeordnet, so dass eine Einbringung des Reaktionsmittels entgegen dem Abgasstrom möglich ist und zumindest ein Teil des zugeführten Reaktionsmittels auf die zweite Stirnseite auftrifft.

Zudem wir eine Anordnung als vorteilhaft angesehen, bei der das Element an der zweiten Stirnseite eine Aufnahmefähigkeit für Tropfen des Reaktionsmittels mit einem Durchmesser größer 200 µm hat. Gerade bei der Zugabe des Reaktionsmittels mit einem Tropfendurchmesser größer als 200 µm [Mikrometer] sollte das Element zur Abgasreinigung nahe der zweiten Stirnseite lokal eine entsprechende Aufnahmefähigkeit und/oder Speicherfähigkeit haben, wie z. B. eine angepasste Porosität. So kommen insbesondere keramische Trägerkörper, eine entsprechend poröse Beschichtung (Washcoat) und/oder ein Abschnitt mit einem metallischen porösen Vlies in Betracht. Bevorzugt liegt die Aufnahme- und/oder Speicherfähigkeit einer Fläche mit einer Ausdehnung vergleichbar zum Tropfendurchmesser beim Doppelten des Volumens des Tropfens. Auch diese Lehre kann unabhängig von der/dem hier beschriebenen Anordnung/Verfahren vorteilhaft sein.

Das erfindungsgemäße Verfahren, auf das sich die Erfindung ferner richtet, dient der Zugabe eines Reaktionsmittels in eine Abgasleitung während des Betriebes einer Verbrennungskraftmaschine, wobei eine Zugabeeinheit stromabwärts eines Elementes zur Abgasreinigung und im laminaren Strömungsbereich des Elementes angeordnet ist, und zumindest 90% des zugegeben Reaktionsmittels auf eine zweite Stirnseite des Elementes aufgegeben werden. Dabei muss die Zugabeeinheit nicht innerhalb des laminaren Strömungsbereichs des Elementes angeordnet sein, der nur im Bereich des Abgasleitungsdurchmessers vorliegt und fluchtend zu der zweiten Stirnseite des Elementes angeordnet ist. Vielmehr kann sie auch seitlich versetzt zu diesem laminaren Strömungsbereich positioniert werden, so dass der Sprühkegel der Zugabeeinheit insbesondere in einem nicht (direkt) durchströmten Teilbereich ausgebildet wird und sich dann bevorzugt ausschließlich im laminaren Strömungsbereich des Elementes fortsetzt.

Gemäß einer Weiterbildung des Verfahrens wird das Reaktionsmittel mit einer asymmetrisch ausgeformten Düse der Zugabeeinheit auf eine zweite Stirnseite des Elementes gesprüht. Eine asymmetrisch ausgeformte Düse erzeugt einen entsprechend asymmetrischen Sprühkegel, in dem in einer Ebene senkrecht zur Sprührichtung Bereiche unterschiedlicher Reaktionsmittelmengen vorliegen. Damit wird erreicht, dass insbesondere bei einer Anordnung der Zugabeeinheit außerhalb des Abgasleitungsdurchmessers unterschiedlichen Teilbereichen der Stirnseite eine individuell festgelegte Menge an Reaktionsmittel zugeführt werden kann.

Gemäß einer weiteren vorteilhaften Weiterbildung des Verfahrens ist die Zugabeeinheit außerhalb des Abgasleitungsdurchmessers angeordnet und beaufschlagt mindestens 90 % einer Fläche der zweiten Stirnseite. Die Zugabeeinheit ist also derart gegenüber der zweiten Stirnseite angeordnet, dass bevorzugt die gesamte Fläche der zweiten Stirnseite mit dem Reaktionsmittel beaufschlagt wird. Als Fläche der zweiten Stirnseite wird hier die (gegebenenfalls gebogene Ebene) definiert, die durch die Endpunkte der Struktur des Elementes aufgespannt wird.

Gemäß einer besonders vorteilhaften Weiterbildung des Verfahrens wird die zweite Stirnfläche des Elementes mit einer gleichmäßigen Flächenbeladung von Reaktionsmittel beaufschlagt. Damit ist insbesondere gemeint, dass jeder Teilbereich der zweiten Stirnseite des Elementes, der innerhalb des Sprühkegels der Zugabeeinheit angeordnet ist, mit der gleichen Menge an Reaktionsmittel beaufschlagt wird. Diese vorteilhafte Verteilung des Reaktionsmittels führt zu einer gleichmäßiegen Umsetzung des Reaktionsmittels in dem Abgasstrom, sodass eine optimale Reinigung des Abgasstromes erreicht wird.

Gemäß einer weiteren Ausführungsform des Verfahrens kontaktiert zumindest 90 % des zugegebenen Reaktionsmittels die Oberfläche der zweiten Stirnseite des Elementes. Als Oberfläche des Elementes ist sowohl die Fläche der zweiten Stirnseite des Elementes definiert, als auch Oberflächen innerhalb des Elementes selbst. Durch Kontaktierung von zumindest 90 % des zugegebenen Reaktionsmittels mit der Oberfläche der zweiten Stirnseite des Elementes wird eine möglichst feine Verteilung des Reaktionsmittels in dem Abgasstrom erreicht und damit die Verdampfung des Reaktionsmittels verbessert.

Gemäß einer Weiterbildung des Verfahrens ist die Größe von Tropfen des in die Abgasleitung zugegebenen Reaktionsmittels unterschiedlich. Damit ist z.B. gemeint, dass die Düse der Zugabeeinheit Tropfen in unterschiedlicher Größe insbesondere in Abhängigkeit von Abgasgeschwindigkeit und Reaktionsmittelzufuhrgeschwindigkeit erzeugen kann. Weiterhin kann durch eine asymmetrisch gestaltete Düse der Zugabeeinheit die Größe der Tropfen innerhalb des Sprühkegels unterschiedlich ausgebildet werden, so dass das Reaktionsmittel in Abhängigkeit von Strömungsbedingungen des Abgasstromes durch das Element mit einer möglichst gleichen Flächenbeladung auf die zweite Stirnseite des Elementes aufgebracht werden kann. So sind insbesondere die Tropfen im Bereich des Sprühkegels der Zugabeeinheit, die auf weiter entfernt liegende Bereiche der zweiten Stirnseite des Elementes gerichtet sind, größer auszuführen als die Tropfen, die nur eine kurze Wegstrecke von der Zugabeeinheit zur zweiten Stirnseite zurückzulegen haben.

Die Tropfengröße ist insbesondere in Abhängigkeit von Abgasgeschwindigkeit, Winkel der Zugabeeinheit und Geschwindigkeit des zugeführten Reaktionsmittels zu wählen. Bevorzugt werden (auch/nur) Tropfen mit mehr als 200 µm [Mikrometer] Durchmesser erzeugt, die bei Abgasgeschwindigkeiten von ungefähr 20 bis 25 m/s auch entfernte Bereiche der zweiten Stirnseite des Elementes erreichen können. Dieses Verfahren kann auch unabhängig von der vorstehenden Ausgestaltung der Anordnung und/oder des Verfahrens verwirklicht werden. Andernfalls können auch kleinere Tropfen eingesetzt werden.

Gemäß einer weiteren Ausführungsform beträgt das Verhältnis vom größten Tropfen zum kleinsten Tropfen zumindest 3 zu 1. Die kleinsten erzeugten Tropfen werden bevorzugt den Bereichen der zweiten Stirnseite zugeführt, die in nur geringem Abstand zur Zugabeeinheit angeordnet sind, während die größten Tropfen, insbesondere mit Tropfendurchmessern von zumindest 200 µm [Mikrometern] den entfernten Bereichen der zweiten Stirnseite zugeführt werden.

Gemäß einer weiteren vorteilhaften Ausführungsform ist die Geschwindigkeit der Tropfen des in die Abgasleitung zugegebenen Reaktionsmittels unterschiedlich. Auch hier sollte die Geschwindigkeit der Tropfen, die auf zur Zugabeeinheit entfernt angeordneten Bereichen der zweiten Stirnseite des Elementes auftreffen, höhere Tropfengeschwindigkeiten aufweisen. Insbesondere ist die Anpassung der Parameter Tropfengröße und Tropfengeschwindigkeit aufeinander abzustimmen und gegebenenfalls zu kombinieren.

Gemäß einer weiteren vorteilhaften Ausführungsform ist das Verhältnis von höchster Geschwindigkeit zu niedrigster Geschwindigkeit der Tropfen zumindest 3 zu 1.

Darüber hinaus kann vorteilhafterweise auch vorgesehen sein, dass die Zugabe des Reaktionsmittels mittels eines Zugabedrucks hin zur Zugabeeinheit geregelt wird. Folglich kann also auch der Druck in der Zufuhrleitung des Reaktionsmittels angepasst werden (ohne die (verschiedenen) Einstellungen für die Düse variieren zu müssen). Dazu kann z. B. eine Pumpe einen Förderdruck einstellen, ein Druckregelventil den passenden, gewünschten Zugabedruck in der Zuführleitung einstellen und ein Ventil die gewünschte Menge (Tropfen, Geschwindigkeit) in die Abgasleitung hinzugeben. Dieses Verfahren kann auch unabhängig von der vorstehenden Ausgestaltung der Anordnung und/oder des Verfahrens verwirklicht werden.

Die erfindungsgemäße Anordnung und/oder das erfindungsgemäße Verfahren sind insbesondere zum Einsatz in einem Kraftfahrzeug vorgesehen und können gegebenenfalls miteinander kombiniert werden.

Bevorzugt betrifft die Anordnung bzw. das Verfahren die Zugabe von flüssiger Harnstoff-Wasser-Lösung, wobei das Element zumindest an einem Abschnitt der zweiten Stirnseite eine Hydrolysebeschichtung aufweist.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf die sie hier jedoch nicht beschränkt sind. Für gleiche Gegenstände werden in den Figuren auch gleiche Bezugszeichen verwendet. Es zeigen schematisch:
- Fig. 1:: eine Anordnung in einem Kraftfahrzeug;
- Fig. 2:: eine erste Ausgestaltung einer Anordnung;
- Fig. 3:: die erste Ausgestaltung der Anordnung im Moment des Einbringens des Reaktionsmittels;
- Fig. 4:: eine zweite Ausgestaltung einer Anordnung mit sphärischer zweiter Stirnseite und
- Fig. 5:: eine dritte Ausgestaltung einer Anordnung mit geneigter zweiter Stirnseite.

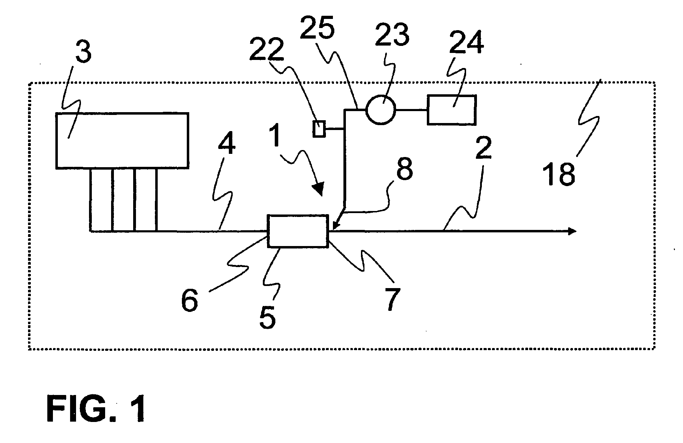

Fig. 1 zeigt eine Anordnung 1 in einem Kraftfahrzeug 18 mit einer Verbrennungskraftmaschine 3 und einer Abgasleitung 4, die ein Abgasstrom 2 durchströmt. Dabei ist in der Abgasleitung 4 ein Element 5 angeordnet mit einer stromaufwärts angeordneten ersten Stirnseite 6 und einer stromabwärts angeordneten zweiten Stirnseite 7, sowie einer stromabwärts des Elementes 5 angeordneten Zugabeeinheit 8. Die Zugabeeinheit 8 ist über eine Zuführleitung 25 mit einer Pumpe 23 und einem Tank 24 verbunden. Zusätzlich kann ein Druckregelventil 22 mit der Zuführleitung 25 verbunden sein, so dass ein Förderdruck, der durch die Pumpe 23 in der Zuführleitung 25 bereitgestellt wird, gegebenenfalls durch das Druckregelventil 22 auf einen Zugabedruck abgesenkt werden kann. Das Reaktionsmittel wird dann aus der Zuführleitung 25 mit dem Zugabedruck in die Abgasleitung 4 eingebracht. Dafür ist die Zugabeeinheit 8 mit einem geregelten Ventil ausgeführt, durch das die gewünschte Menge an Reduktionsmittel zum gewünschten Zeitpunkt in die Abgasleitung 4 gefördert wird.

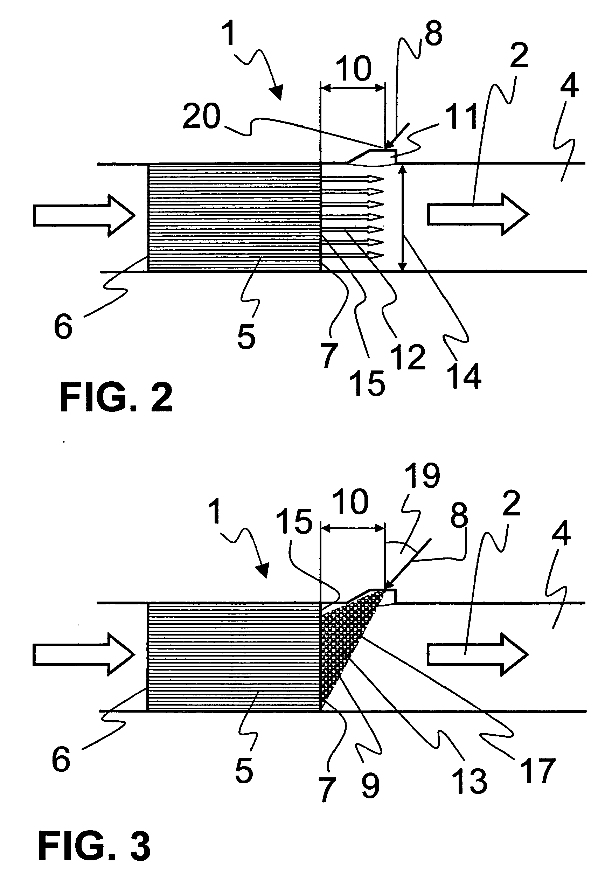

Fig. 2 zeigt eine Anordnung 1 mit einem Element 5 angeordnet in einer Abgasleitung 4, wobei das Element 5 mit einer ersten Stirnseite 6 von einem Abgasstrom 2 durch die erste Stirnseite 6 in Richtung der zweiten Stirnseite 7 durchströmt wird. Die zweite Stirnseite 7 weist eine Fläche 15 auf, die im Wesentlichen der Querschnittsfläche der Abgasleitung 4 entspricht. Stromabwärts des Elementes 5 wird bis zu einer Entfernung 10 von der zweiten Stirnseite 7 des Elementes 5 ein laminarer Strömungsbereich 12 erzeugt. Innerhalb dieses laminaren Strömungsbereiches 12, der während des Betriebes der Anordnung 1 stets vorliegt, ist eine reproduzierbare Einbringung von Reaktionsmittel möglich, so dass eine gleichmäßige Flächenbeladung der Fläche 15 mit Reaktionsmittel erreichbar ist. Die Zugabeeinheit 8 für das Reaktionsmittel ist in einer nur geringen Entfernung 10 zur zweiten Stirnseite 7 angeordnet, so dass insbesondere die vollständige Menge an Reaktionsmittel durch den laminaren Strömungsbereich 12 auf die zweite Stirnseite 7 des Elementes 5 gelangt. Dabei ist die Zugabeeinheit 8 mit einer Düse 20 innerhalb eines Teilbereichs 11 der Abgasleitung 4 angeordnet, der außerhalb des Abgasleitungsdurchmessers 14 positioniert ist und insbesondere nicht von dem Abgasstrom 2 durchströmt wird, so dass die Zugabeeinheit 8 einerseits nicht durch im Abgasstrom 2 enthaltene Partikel verunreinigt oder beschädigt wird und andererseits eine reproduzierbare und bestimmbare Ausbildung eines Sprühkegels erreichbar ist.

Fig. 3 zeigt ein Element 5 in der Abgasleitung 4, wobei das Element 5 der Anordnung 1 vom Abgasstrom 2 durch eine erste Stirnseite 6 hin zu einer zweiten Stirnseite 7 durchströmt wird. Eine stromabwärts zu Element 5 angeordnete Zugabeeinheit 8 für ein Reaktionsmittel 9 sprüht einen Sprühkegel 13 in die Abgasleitung 4 hinein, der die Fläche 15 des Elementes 5 möglichst vollständig bedeckt. Dabei werden Tropfen 17 innerhalb des Sprühkegels 13 gebildet, die hinsichtlich ihrer Größe und Geschwindigkeit in Abhängigkeit zumindest von Abgasgeschwindigkeit, Abstand der Wandbereiche der zweiten Stirnseite 7 zur Zugabeeinheit 8 und Winkel 19 der Zugabeeinheit 8 eingestellt sind.

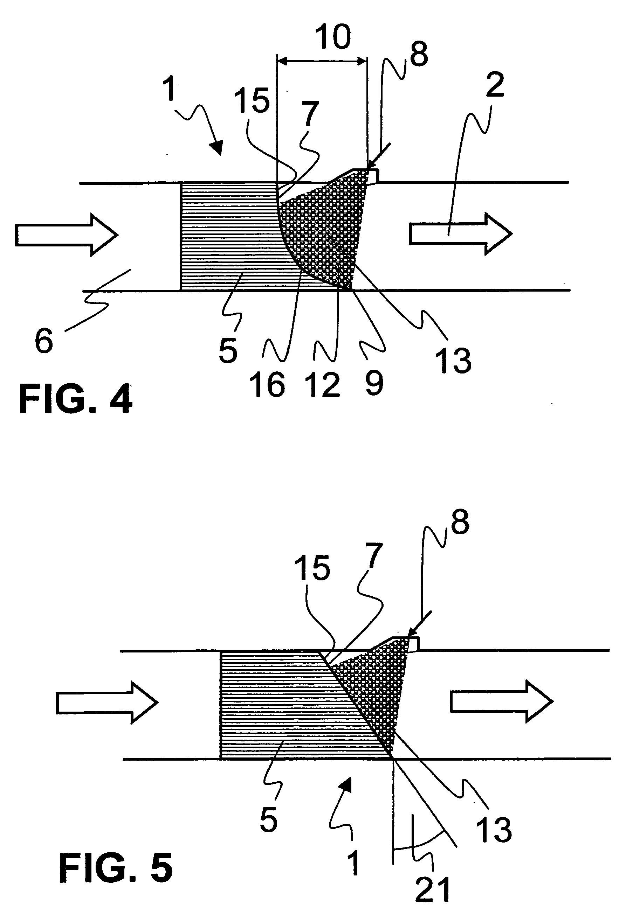

Fig. 4 zeigt eine Anordnung 1 mit dem Element 5 und einer ersten Stirnseite 6, wobei eine zweite Stirnseite 7 vorgesehen ist, die sphärisch gegenüber der Zugabeeinheit 8 ausgeführt ist, sodass eine möglichst konstante Flächenbeladung der zweiten Stirnseite 7 mit Reaktionsmittel 9 ermöglicht wird. Der Sprühkegel 13 der Zugabeeinheit 8 muss dann nur in geringem Maße asymmetrisch angepasst werden, um eine möglichst gleichmäßige Flächenbeladung der zweiten Stirnseite 7 des Elementes 5 zu erreichen. Dabei trifft das Reaktionsmittel 9 nicht nur auf die äußerste Begrenzung der zweiten Stirnseite 7, sondern kontaktiert wenigstens zum Teil auch die Oberflächen 16 des Elementes 5, sodass die mit Reaktionsmittel 9 benetzte Oberfläche 16 größer ist als die stirnseitige Fläche 15 der zweiten Stirnseite 7. Die Entfernung 10 ist als Abstand zwischen Zugabeeinheit 8 und zweiter Stirnseite 7 definiert, wobei die Entfernung 10 in Hauptströmungsrichtung des Abgasstromes 2 im laminaren Strömungsbereich 12 gemessen wird.

Fig. 5 zeigt eine weitere besonders vorteilhafte Ausgestaltung der Anordnung 1, wobei das Element 5 eine um einen Neigungswinkel 21 geneigte zweite Stirnseite 7 aufweist, durch die mit einem Sprühkegel 13 einer Zugabeeinheit 8 eine möglichst konstante Flächenbeladung der Fläche 15 des Elementes 5 erreicht werden kann.

### Bezugszeichenliste

| | |
|---|---|
| 1 | Anordnung |
| 2 | Abgasstrom |
| 3 | Verbrennungskraftmaschine |
| 4 | Abgasleitung |
| 5 | Element |
| 6 | erste Stirnseite |
| 7 | zweite Stirnseite |
| 8 | Zugabeeinheit |
| 9 | Reaktionsmittel |
| 10 | Entfernung |
| 11 | Teilbereich |
| 12 | laminarer Strömungsbereich |
| 13 | Sprühkegel |
| 14 | Abgasleitungsdurchmesser |
| 15 | Fläche |
| 16 | Oberfläche |
| 17 | Tropfen |
| 18 | Kraftfahrzeug |
| 19 | Winkel |
| 20 | Düse |
| 21 | Neigungswinkel |
| 22 | Druckregelventil |
| 23 | Pumpe |
| 24 | Tank |
| 25 | Zuführleitung |

## Patentansprüche

1. Anordnung (1) zur Reinigung eines Abgasstromes (2) einer Verbrennungskraftmaschine (3) zumindest aufweisend eine Abgasleitung (4), in dem ein Element (5) zur Abgasreinigung mit einer ersten Stirnseite (6) und einer zweiten Stirnseite (7) angeordnet ist, wobei das Element (5) von der ersten Stirnseite (6) zur Stirnseite (7) von dem Abgasstrom (2) durchströmbar ist und eine Vergleichmäßigung der Abgasströmung über den Querschnitt der Abgasleitung (4) erreicht, die sich zumindest in einem kurzen Bereich stromabwärts des Elementes (5) als laminarer Strömungsbereich (12) fortsetzt, und stromabwärts des Elementes (5) eine Zugabeeinheit (8) zur Zugabe eines Reaktionsmittels (9) in den Abgasstrom (2) vorgesehen ist, wobei die Zugabeeinheit (8) in einer Entfernung (10) von höchstens 30 mm, insbesondere von höchstens 20 mm, von der zweiten Stirnseite (7) des Elementes (5) beabstandet ist und im laminaren Strömungsbereich (12) des Elementes (5) angeordnet ist, so dass zumindest 90 % des zugeführtten Reaktionsmittels (9) auf die zweite Stirnseite (7) des Elementes (5) trifft.

2. Anordnung (1) nach Patentanspruch 1, wobei die zweite Stirnseite (7) sphärisch geformt ist.

3. Anordnung (1) nach einem der Patentansprüche 1 oder 2, wobei die Zugabeeinheit (8) außerhalb eines Abgasleitungsdurchmessers (14) angeordnet ist.

4. Anordnung (1) nach einem der vorhergehenden Patentansprüche, wobei das Element (5) an der zweiten Stirnseite (7) eine Aufnahmefähigkeit für Tropfen (17) des Reaktionsmittels (9) mit einem Durchmesser größer 200 µm hat.

5. Verfahren zur Zugabe eines Reaktionsmittels (9) in eine Abgasleitung (4) während des Betriebes einer Verbrennungskraftmaschine (3), wobei eine Zugabeeinheit (8) stromabwärts eines Elementes (5) zur Abgasreinigung angeordnet ist, wobei das Element (5) eine Vergleichmäßigung der Abgasströmung über den Querschnitt der Abgasleitung (4) erreicht, die sich zumindest in einem kurzen Bereich stromabwärts des Elementes (5) als laminarer Strömungsbereich (12) fortsetzt, wobei die Zugabeeinheit (8) im laminaren Strömungsbereich (12) des Elementes (5) angeordnet ist, und zumindest 90 % des zugegebenen Reaktionsmittels (9) auf eine zweite Stirnseite (7) des Elementes (5) aufgegeben werden.

6. Verfahren nach Patentanspruch 5, wobei das Reaktionsmittel (9) mit einer asymmetrisch ausgeformten Düse (20) der Zugabeeinheit (8) auf eine zweite Stirnseite (7) des Elementes (5) gesprüht wird.

7. Verfahren nach einem der Patentansprüche 5 oder 6, wobei die Zugabeeinheit (8) außerhalb des Abgasleitungsdurchmessers (14) angeordnet ist und mindestens 90 % der Fläche (15) der zweiten Stirnseite (7) mit dem Reaktionsmittel (9) beaufschlagt wird.

8. Verfahren nach einem der Patentansprüche 5 bis 7, wobei die zweite Stirnseite (7) des Elementes (5) mit einer gleichmäßigen Flächenbeladung von Reaktionsmittel (9) beaufschlagt wird.

9. Verfahren nach einem der Patentansprüche 5 bis 8, wobei die Größe der Tropfen (17) des in die Abgasleitung (4) zugegebenen Reaktionsmittels (9) unterschiedlich ist.

10. Verfahren nach Patentanspruch 9, wobei das Verhältnis von größten Tropfen (17) zu kleinsten Tropfen (17) zumindest 3 zu 1 beträgt.

11. Verfahren nach einem der Patentansprüche 5 bis 10, wobei die Geschwindigkeit der Tropfen (17) des in die Abgasleitung (4) zugegebenen Reaktionsmittels (9) unterschiedlich ist.

12. Verfahren nach Patentanspruch 11, wobei das Verhältnis von höchster Geschwindigkeit zu niedrigster Geschwindigkeit zumindest 3 zu 1 beträgt.

13. Verfahren nach einem der Patentansprüche 5 bis 12, wobei die Zugabe des Reaktionsmittels (9) mittels eines Zugabedrucks hin zur Zugabeeinheit (8) geregelt wird.

## Claims

1. Arrangement (1) for the purification of an exhaust-gas flow (2) of an internal combustion engine (3), at least having one exhaust line (4) in which is arranged an element (5) for exhaust-gas purification, which element (5) has a first end side (6) and a second end side (7), wherein it is possible for the exhaust-gas flow (2) to flow through the element (5) from the first end side (6) to the second end side (7) and the element (5) provides for homogenization of the exhaust-gas flow over the cross section of the exhaust line (4), which homogenization continues at least in a short region downstream of the element (5) as laminar flow region (12), and wherein an adding unit (8) for adding a reactant (9) into the exhaust-gas flow (2) is provided downstream of the element (5), wherein the adding unit (8) is spaced apart from the second end side (7) of the element (5) by a distance (10) of at most 30 mm, in particular of at most 20 mm, and arranged in the laminar flow region (12) of the element (5), such that at least 90 % of the supplied reactant (9) impinges on the second end side (7) of the element (5).

2. Arrangement (1) according to claim 1, wherein the second end side (7) is of spherical shape.

3. Arrangement (1) according to one of claims 1 and 2, wherein the adding unit (8) is arranged outside an exhaust line diameter (14).

4. Arrangement (1) according to one of the preceding claims, wherein the element (5) have, at the second end side (7) , an absorption capacity for droplets (17) of the reactant (9) with a diameter of greater than 200 µm.

5. Method for adding a reactant (9) into an exhaust line (4) during the operation of an internal combustion engine (3), wherein an adding unit (8) is arranged downstream of an element (5) for exhaust-gas purification, wherein the element (5) provides for homogenization of the exhaust-gas flow over the cross section of the exhaust line (4), which homogenization continues at least in a short region downstream of the element (5) as laminar flow region (12), wherein the adding unit (8) is arranged in the laminar flow region (12) of the element (5), and wherein at least 90 % of the supplied reactant (9) is dispensed onto a second end side (7) of the element (5).

6. Method according to claim 5, wherein the reactant (9) is being sprayed onto a second end side (7) of the element (5) by means of an asymmetrically shaped nozzle (20) of the adding unit (8).

7. Method according to one of claims 5 or 6, wherein the adding unit (8) is arranged outside the exhaust line diameter (14) and wherein at least 90% of the area (15) of the second end side (7) is impinged on by the reactant (9).

8. Method according to one of patent 5 to 7, wherein the second end side (7) of the element (5) is being impinged on with reactant (9) with uniform area loading.

9. Method according to one of claims 5 to 8, wherein the size of the droplets (17) of the reactant (9) added into the exhaust line (4) is variable.

10. Method according to claim 9, wherein the ratio of largest droplets (17) to smallest droplets (17) is at least 3 to 1.

11. Method according to one of claims 5 to 10, wherein the speed of the droplets (17) of the reactant (9) added into the exhaust line (4) is variable.

12. Method according to claim 11, wherein the ratio of highest speed to lowest speed is at least 3 to 1.

13. Method according to one of claims 5 to 12, wherein the adding of the reactant (9) is controlled by means of an adding pressure applied to the adding unit (8).

## Revendications

1. Dispositif (1) pour l'épuration d'un courant de gaz d'échappement (2) d'un moteur à combustion interne (3) présentant au moins une conduite de gaz d'échappement (4), dans laquelle est disposé un élément (5) pour l'épuration des gaz d'échappement avec un premier côté frontal (6) et un deuxième côté frontal (7), dans lequel l'élément (5) peut être parcouru par le courant de gaz d'échappement (2) depuis le premier côté frontal (6) jusqu'au deuxième coté frontal (7) et atteint une uniformisation de l'écoulement de gaz d'échappement sur la section transversale de la conduite de gaz d'échappement (4), qui se propage au moins dans une courte zone en aval de l'élément (5) sous forme de zone d'écoulement laminaire (12) et il est prévu, en aval de l'élément (5), une unité d'addition (8) pour l'addition d'un agent réactif (9) dans le courant de gaz d'échappement (2), dans lequel l'unité d'addition (8) est espacée d'une distance (10) de 30 mm au maximum, en particulier de 20 mm au maximum, du deuxième côté frontal (7) de l'élément (5) et est disposée dans la zone d'écoulement laminaire (12) de l'élément (5), de telle manière qu'au moins 90 % de l'agent réactif ajouté (9) arrivent sur le deuxième côté frontal (7) de l'élément (5).

2. Dispositif (1) selon la revendication 1, dans lequel le deuxième côté frontal (7) est de forme sphérique.

3. Dispositif (1) selon l'une des revendications 1 ou 2, dans lequel l'unité d'addition (8) est disposée à l'extérieur d'un diamètre (14) de la conduite de gaz d'échappement.

4. Dispositif (1) selon l'une quelconque des revendications précédentes, dans lequel l'élément (5) possède sur le deuxième côté frontal (7) un pouvoir de réception de gouttes (17) de l'agent réactif (9) d'un diamètre supérieur à 200 µm.

5. Procédé pour l'addition d'un agent réactif (9) dans une conduite de gaz d'échappement (4) pendant le fonctionnement d'un moteur à combustion interne (3), dans lequel une unité d'addition (8) est disposée en aval de l'élément (5) pour l'épuration de gaz d'échappement, dans lequel l'élément (5) atteint une uniformisation de l'écoulement de gaz d'échappement sur la section transversale de la conduite de gaz d'échappement (4), qui se propage dans une courte zone en aval de l'élément (5) sous forme de zone d'écoulement laminaire (12), dans lequel l'unité d'addition (8) est disposée dans la zone d'écoulement laminaire (12) de l'élément (5) et au moins 90 % de l'agent réactif ajouté (9) sont apportés sur un deuxième côté frontal (7) de l'élément (5).

6. Procédé selon la revendication 5, dans lequel on pulvérise l'agent réactif (9) avec une buse (20) de forme asymétrique de l'unité d'addition (8) sur un deuxième côté frontal (7) de l'élément (5).

7. Procédé selon l'une des revendications 5 ou 6, dans lequel l'unité d'addition (8) est disposée à l'extérieur d'un diamètre (14) de la conduite de gaz d'échappement et au moins 90 % de la surface (15) du deuxième côté frontal (7) sont exposés à l'agent réactif (9).

8. Procédé selon l'une quelconque des revendications 5 à 7, dans lequel le deuxième côté frontal (7) de l'élément (5) est exposé à une charge superficielle uniforme de l'agent réactif (9).

9. Procédé selon l'une quelconque des revendications 5 à 8, dans lequel la taille des gouttes (17) de l'agent réactif (9) ajouté dans la conduite de gaz d'échappement (4) est différente.

10. Procédé selon la revendication 9, dans lequel le rapport des plus grosses gouttes (17) aux plus petites gouttes (17) vaut au moins 3 à 1.

11. Procédé selon l'une quelconque des revendications 5 à 10, dans lequel la vitesse des gouttes (17) de l'agent réactif (9) ajouté dans la conduite de gaz d'échappement (4) est différente.

12. Procédé selon la revendication 11, dans lequel le rapport de la vitesse la plus élevée à la vitesse la plus basse vaut au moins 3 à 1.

13. Procédé selon l'une quelconque des revendications 5 à 12, dans lequel l'addition de l'agent réactif (9) est régulée au moyen d'une pression d'addition en direction de l'unité d'addition (8).
